Europäisches Patentamt

European Patent Office

Office européen des brevets

(11) Veröffentlichungsnummer: **0 154 693**
A2

# (12) EUROPÄISCHE PATENTANMELDUNG

(21) Anmeldenummer: 84114835.6

(51) Int. Cl.⁴: **B 60 C 15/02**

(22) Anmeldetag: 06.12.84

(30) Priorität: 12.03.84 DE 3408953

(43) Veröffentlichungstag der Anmeldung: 18.09.85
Patentblatt 85/38

(84) Benannte Vertragsstaaten: **AT BE CH DE FR GB IT LI LU NL SE**

(71) Anmelder: **Continental Gummi-Werke Aktiengesellschaft, Königsworther Platz 1, D-3000 Hannover 1 (DE)**

(72) Erfinder: **Frerichs, Udo, Dipl.-Ing., Buchenweg 7, D-3012 Langenhagen 8 (DE)**
Erfinder: **Rach, Heinz-Dieter, Dipl.-Ing., Planetenring 32, D-3008 Garbsen 1 (DE)**
Erfinder: **Klose, Hans-Ulrich, Dipl.-Ing., Hauptstrasse 15, D-3061 Wiedensahl (DE)**

(54) Fahrzeugrad.

(57) Die Erfindung bezieht sich auf ein luftbereiftes Fahrzeugrad mit einer starren Felge, bei der sich die Felgenhörner im wesentlichen nach radial innen erstrecken und bei der der Reifen mit seinen Wülsten am radial inneren Umfang des Felgenkranzes befestigt ist und sich neben den Reifenwülsten ein ringförmiges Bauteil befindet. Zur Erhöhung der Sicherheit des Fahrzeugrades im Reifenwulst- und Felgenhornbereich wird vorgeschlagen, daß die Felgenhörner axial innen hinterschnitten ausgebildet sind, daß der von den Hinterschneidungen gebildete Raum einen Teil des Reifenwulstes und einen Teil des Wulstkerns aufnimmt und daß das ringförmige Bauteil in Form eines Sicherheitsrings derart knicksteif und formstabil ausgebildet ist, daß es im Zusammenhang mit der Felgenhornspitze eine einkeilende Wirkung auf den Reifenwulst ausübt.

Continental Gummi-Werke Aktiengesellschaft, Hannover

Fahrzeugrad

Die Erfindung betrifft ein luftbereiftes Fahrzeugrad mit einer starren Felge und mit einem Fahrzeugluftreifen aus Gummi oder gummiähnlichen Kunststoffen, der eine Karkasse aufweist, die in den Wülsten durch Umschlingen von zug- und druckfesten Wulstkernen verankert ist, bei dem die Felge sich im wesentlichen radial nach innen erstreckende Felgenhörner aufweist, bei dem der Reifen mit seinen Wülsten am radial inneren Umfang der Felge befestigt ist und bei dem sich neben den Reifenwülsten ein Montageraum mit einem Montagehochbett befindet, der ein ringförmiges Bauteil aufnimmt.

Ein solches Fahrzeugrad, das sich durch gute Fahreigenschaften und eine hohe Funktionstüchtigkeit im Falle einer Reifenpanne auszeichnet, ist z. B. in der älteren Patentanmeldung P 32 37 544.1 vorgeschlagen worden. Der in dieser Anmeldung beschriebene Füllring aus Gummi oder Schaumstoff, der bei einem Rad gemäß DE-OS 30 00 428.5 oder DE-OS 31 45 252.3 den Raum axial innen vom Reifenwulst ausfüllt, dient in erster Linie dazu, ein Eindringen von Spritzwasser und Schmutz in den gefährdeten Raum zu vermeiden, kann jedoch zum Teil auch schon als Sicherheitselement dazu dienen, eine Verlagerung des Reifenwulstes in bestimmten Fahrsituationen zu verhindern. Dies kann ebenfalls bei Sicherheitsprüfungen von Bedeutung sein, bei denen unter anderem der sogenannte Platzdruck ermittelt wird.

Bei Fahrzeugrädern der eingangs genannten Art wäre außer einem Platzen des Reifens auch ein Einknicken der Reifenwülste nach radial innen denkbar.

Der Erfindung liegt deshalb die Aufgabe zugrunde, ein Fahrzeugrad der eingangs genannten Art im Wulst- und Felgenhornbereich derart

0154693

weiterzuentwickeln, daß die Sicherheitsschwelle bezüglich des Platzdrucks noch über der von konventionellen Fahrzeugrädern bzw. -Reifen liegt.

Diese Aufgabe wird erfindungsgemäß dadurch gelöst, daß die Felgenhörner axial innen hinterschnitten ausgebildet sind, daß der von den Hinterschneidungen gebildete Raum einen Teil des Reifenwulstes und einen Teil des Wulstkerns aufnimmt und daß das ringförmige Bauteil in Form eines Sicherheitsrings derart knicksteif und formstabil ausgebildet ist, daß es im Zusammenhang mit der Felgenhornspitze eine einkeilende Wirkung auf den Reifenwulst ausübt.

Durch die an sich bekannte Maßnahme eines hinterschnittenen Felgenhorns und durch das Eintauchen eines Teils des Reifenwulstes und vor allem eines Teils des zug- und druckfesten Wulstkerns in den von der Hinterschneidung gebildeten Raum wird bereits eine erhöhte Sicherheit insoweit erzielt als bei einem Zug der unteren Reifenseitenwand infolge von überhöhtem Luft- (oder Wasser-) druck der Reifenwulst sich nicht radial nach innen verschieben kann. Eine solche Bewegung wäre allenfalls bei gleichzeitiger Verschiebung des Reifenwulstes nach axial innen möglich. Dies wiederum wird durch die weitere Maßnahme verhindert, den Montageraum mit einem knicksteifen und formstabilen ringförmigen Bauteil auszufüllen. Dabei befindet sich das ringförmige Bauteil, das nachfolgend als Sicherheitsring bezeichnet werden soll, so stramm zwischen der Felgenschüssel und der Reifenwulstwand, daß es keine wesentlichen Verschiebungen des Reifenwulstes nach axial innen hin erlaubt. Die Seitenwände des Sicherheitsrings und des Reifenwulstes sind im Berührungsbereich so ausgebildet, z. B. senkrecht verlaufend, daß der Reifenwulst sich bei einem Zug an der unteren Reifenseitenwand infolge der Felgenhornhinterschneidung immer stärker zwischen Felgenhorn und Sicherheitsring verkeilt.

Vorteilhafte Ausgestaltungen der Erfindung sind den Unteransprüchen zu entnehmen.

Nachfolgend werden zwei Ausführungsbeispiele der Erfindung anhand einer Zeichnung näher erläutert.

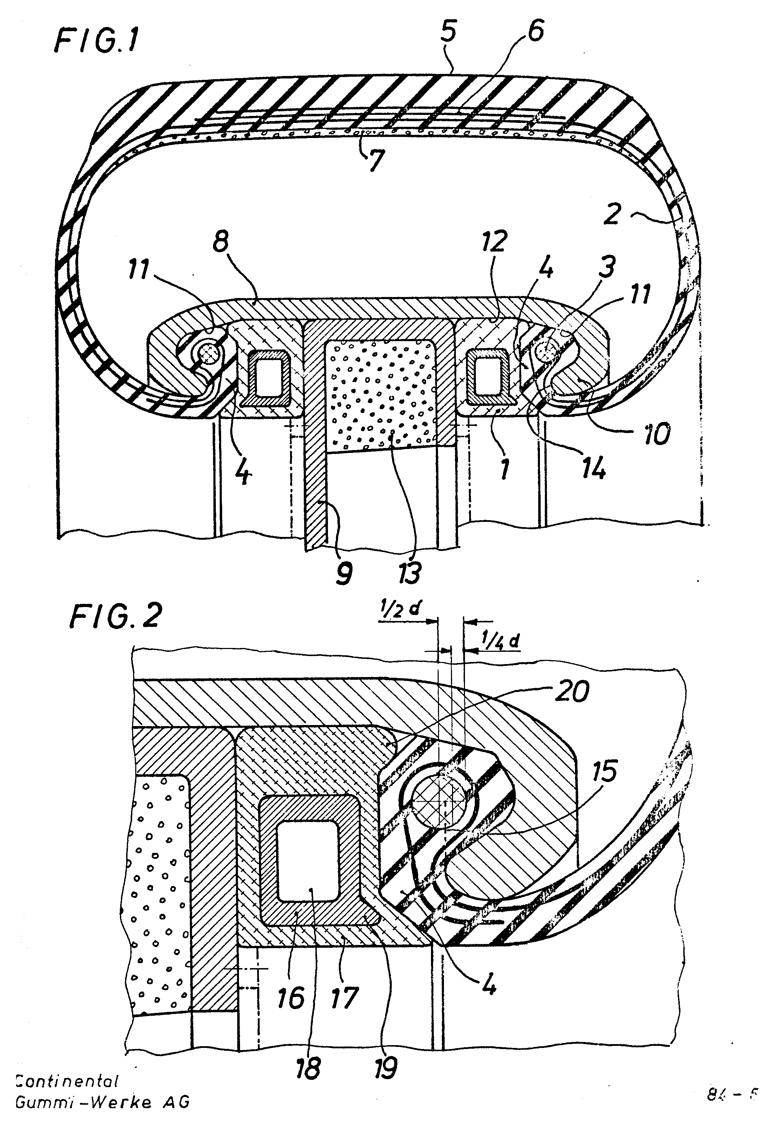

Es zeigt: Fig. 1 ein Fahrzeugrad mit einem ersten Sicherheitsring in einem radialen Teilschnitt.

Fig. 2 das Fahrzeugrad gemäß Fig. 1 in einem vergrößerten Teilausschnitt,

Fig. 3 ein Fahrzeugrad mit einem weiteren Sicherheitsring, der mit der Felgenschüssel und mit dem Reifenwulst in Umfangsrichtung verzahnt ist, in einem radialen Teilschnitt.

Fig. 4 einen Ausschnitt des Rades gemäß Fig. 3 in der Fläche IV - IV, die in Radumfangsrichtung verläuft,

Fig. 5 ein Fahrzeugrad mit einem Sicherheitsring gemäß Fig. 1, jedoch mit einer Felge, die radial außen ein Tiefbett aufweist, in einem radialen Teilschnitt.

In Fig. 1 ist ein Fahrzeugrad mit einem montierten Sicherheitsring dargestellt. Der verwendete Fahrzeugluftreifen, der im wesentlichen aus Gummi oder gummiähnlichen Stoffen besteht, weist eine Radialkarkasse 2 auf - gegebenenfalls kann es auch eine Winkelkarkasse sein -, die mit ihren Enden durch Umschlingen von zug- und druckfesten Wulstkernen 3 in den Wülsten 4 verankert ist. Unterhalb vom Laufstreifen 5 zwischen diesem und der Karkasse 2 befindet sich ein in Umfangsrichtung zugfester, aus zwei oder mehreren Cordgewebelagen bestehender Gürtel 6, der die Seitenstabilisierung des Reifenkörpers bewirkt. Der Reifen weist zudem an seiner Innenfläche etwa in dem Bereich des Laufstreifens 5 eine dünne Gleitschicht 7 auf, die ein reibungsarmes Abstützen auf dem Felgenkranz 8 im Falle einer Panne ermöglicht.

Der bevorzugt aus Metall bestehende Felgenkranz 8 einer einteiligen Felge ist an einer Felgenschüssel 9 angeschweißt und endet im Querschnitt gesehen seitlich außen in einem im wesentlichen sich nach radial innen erstreckenden Felgenhorn 10, neben dem sich am radial inneren Umfang des Felgenkranzes 8 Sitzflächen 11 für die Reifenwülste 4 befinden. Neben den Sitzflächen 11 schließen sich nach axial innen hin Montagehochbetten 12 für die Reifenwülste 4 an. Die radial äußeren Teile des Felgenkranzes 8 sind als Stützflächen für den Reifen zur Abstützung bei einer Panne ausgebildet. Der U-förmige Innenraum der Felgenschüssel 9 ist mit einem Hartschaum 13 ausgefüllt, so daß sich dort kein Schmutz und Spritzwasser ansammeln kann.

Das Felgenhorn 10 weist in seinem radial inneren Bereich eine Wölbung nach axial innen hin auf, so daß zwischen der Felgenhornspitze 14 und der Sitzfläche 11 für den Reifenwulst 4 eine bogenförmige Hinterschneidung entsteht. Der von der Hinterschneidung gebildete Raum, der axial innen von einer Parallelebene 15 zur Mittelebene des Reifens begrenzt wird, nimmt einen Teil des Reifenwulstes 4 und einen Teil des Wulstkerns 3 auf. Es hat sich im Hinblick auf Sicherheitsaspekte und auf eine gute Montierbarkeit des Reifens als günstig erwiesen, den Wulstkern 3 mit einem Viertel bis der Hälfte seines Durchmessers d in den von der Hinterschneidung gebildeten Raum hineinzulegen (Fig. 2).

Zwischen dem Reifenwulst 4 und der Felgenschüssel 9 befindet sich ein im Querschnitt im wesentlichen rechteckiger Sicherheitsring 1, der aus einem oder aus mehreren Teilen bestehen kann. Vorliegend ist der Sicherheitsring 1 einteilig ausgebildet, jedoch an einer Stelle aufgeschnitten, so daß man ihn bei der Montage in seinem Durchmesser verändern kann. Nach der Montage können die Ringenden stumpf aneinanderstoßen und mittels einer Lasche verschraubt sein. Der Sicherheitsring 1 kann auch mit Hilfe eines umlaufenden Vorsprungs (strichpunktiert) an der Felgenschüssel 9 befestigt sein.

Der Sicherheitsring 1 weist einen inneren Hohlkern 16 aus Federstahl und eine Ummantelungsschicht 17 aus Gummi auf. Durch den Hohlraum 18 in der Mitte des Rings 1 wird eine Gewichtseinsparung erzielt. Eine umlaufende Nase 19 am Hohlkern 16 dient der zusätzlichen Verkeilung des Wulstkerns 4, kann sich gegebenenfalls jedoch auch erübrigen. Der Ummantelungsgummi 17 ist so hart zu wählen, daß einerseits kein wesentliches Eindrücken durch einen beanspruchten Reifenwulst 4 möglich ist, andererseits ein eventuell vorhandener Vorsprung 20 bei der Montage am Reifenwulst 4 vorbeigeschoben werden kann. Gegebenenfalls kann der Vorsprung 20 und der benachbarte Bereich aus einem weicheren Gummi bestehen. Der Sicherheitsring 1 kann selbstverständlich auch aus einem geeigneten Kunststoff hergestellt sein.

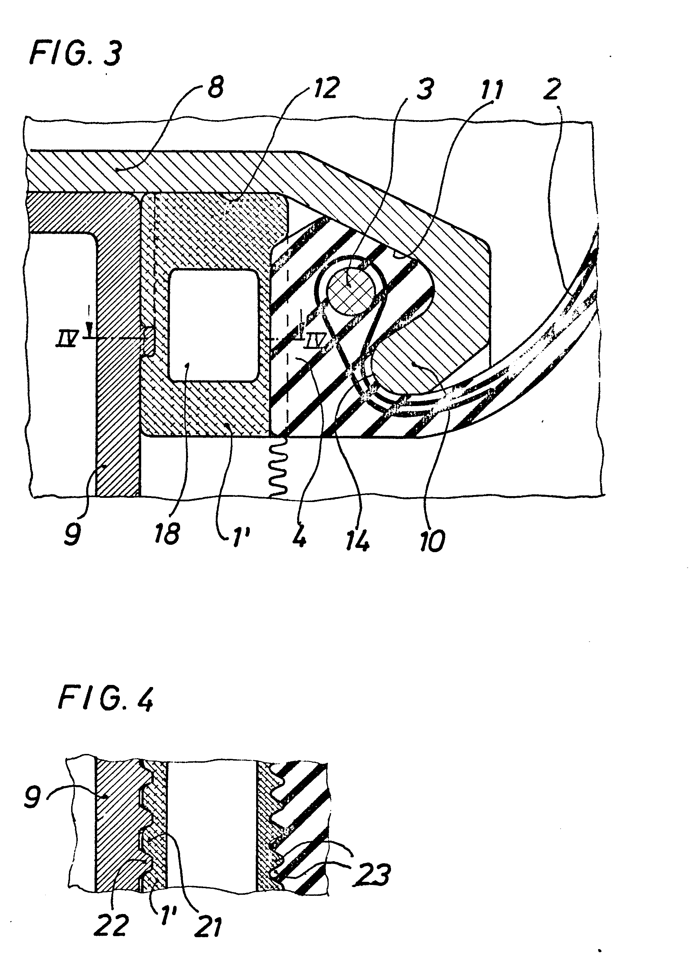

Beim Rad nach Fig. 3 ist der Sicherheitsring 1' aus einem einzigen Material, nämlich einem Gummi mit einer Härte von über 90 Shore A oder einem Kunststoff hergestellt, und er weist wiederum zur Gewichtseinsparung einen Hohlraum 18 auf. Als Besonderheit ist anzumerken, daß der Sicherheitsring 1' mit Mitteln versehen ist, die eine zuverlässige Kraftübertragung zwischen Reifen und Felge auch im Falle einer Panne garantieren. So weist er auf der axial inneren Seite in Umfangsrichtung Vorsprünge 21 mit dazwischenliegenden Lücken auf, die mit entsprechenden Lücken und Zähnen 22 an der Felgenschüssel 9 eine Art Zahntrieb bilden (Fig. 4). Auch die/andere Seite des Sicherheitsrings 1' ist über eine Feinverzahnung 23 kraftschlüssig mit dem Reifenwulst 4 verbunden. Alle weiteren Überlegungen bezüglich des Aufbaus und der Wirkungsweise des Sicherheitsrings 1' und der übrigen Teile des Fahrzeugrads nach Fig. 3 und 4 gelten entsprechend den oben beschriebenen.

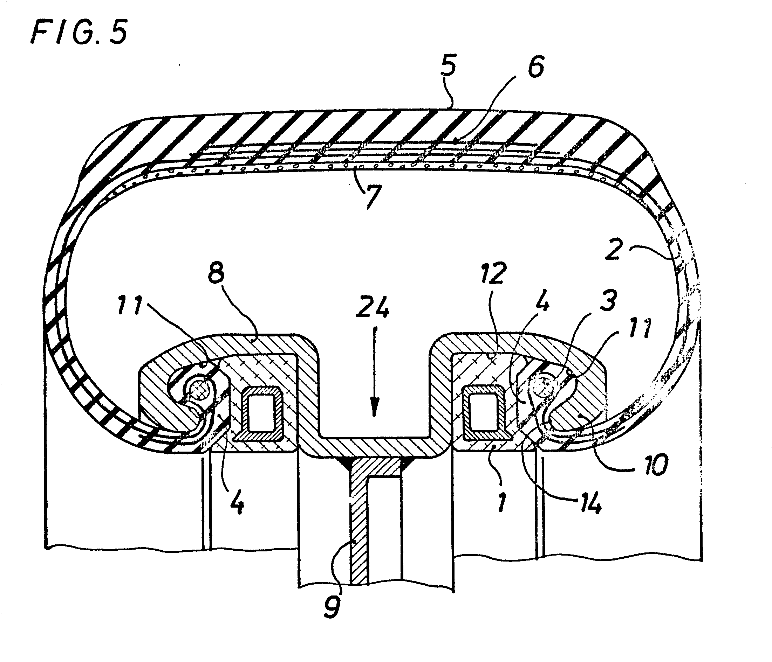

Das Fahrzeugrad gemäß Fig. 5 unterscheidet sich von dem der Fig. 1 und 2 lediglich dadurch, daß der Felgenkranz 8 radial außen ein übliches Tiefbett 24 aufweist. Statt der Schenkel der U-förmigen Felgenschüssel 9 dienen nunmehr die senkrechten Wände des Tiefbettes 24 zur axial inneren Abstützung der Sicherheitsringe 1.

Es sollte angemerkt werden, daß die erfindungsgemäßen Fahrzeugräder sowohl bei Personenkraftwagen als auch bei Lastkraftwagen und anderen Fahrzeugen eingesetzt werden können.

Patentansprüche

1. Luftbereiftes Fahrzeugrad mit einer starren Felge und mit einem Fahrzeugluftreifen aus Gummi oder gummiähnlichen Kunststoffen, der eine Karkasse aufweist, die in den Wülsten durch Umschlingen von zug- und druckfesten Wulstkernen verankert ist, bei dem die Felge sich im wesentlichen radial nach innen erstreckende Felgenhörner aufweist, bei dem der Reifen mit seinen Wülsten am radial inneren Umfang der Felge befestigt ist und bei dem sich neben den Reifenwülsten ein Montageraum mit einem Montagehochbett befindet, der ein ringförmiges Bauteil aufnimmt, dadurch gekennzeichnet, daß die Felgenhörner (10) axial innen hinterschnitten ausgebildet sind, daß der von den Hinterschneidungen gebildete Raum einen Teil des Reifenwulstes (4) und einen Teil des Wulstkerns (3) aufnimmt und daß das ringförmige Bauteil in Form eines Sicherheitsrings (1, 1') derart knicksteif unf formstabil ausgebildet ist, daß es im Zusammenhang mit der Felgenhornspitze (14) eine einkeilende Wirkung auf den Reifenwulst (4) ausübt.

2. Fahrzeugrad nach Anspruch 1, dadurch gekennzeichnet, daß der von der Hinterschneidung gebildete Raum in Querrichtung gesehen etwa das 1/4- bis 1/2-fache des Wulstkerndurchmessers (d) aufnimmt.

3. Fahrzeugrad nach Anspruch 1, dadurch gekennzeichnet, daß die Hinterschneidung des Felgenhorns (10) im Querschnitt im wesentlichen bogenförmig verläuft.

4. Fahrzeugrad nach Anspruch 1, dadurch gekennzeichnet, daß der Sicherheitsring (1') im wesentlichen aus einem hochfesten Kunststoff oder einem Gummi mit einer Härte von mehr als 90 Shore A besteht.

5. Fahrzeugrad nach Anspruch 1 und/oder 4, dadurch gekennzeichnet, daß der Sicherheitsring (1, 1') als Hohlkörper ausgebildet ist.

6. Fahrzeugrad nach einem der vorhergehenden Ansprüche, dadurch gekennzeichnet, daß der Sicherheitsring (1) einen Metallhohlkern (16) ent-

hält.

7. Fahrzeugrad nach Anspruch 1, gekennzeichnet durch einen einteiligen, in Querrichtung geschlitzten Sicherheitsring (1, 1').

8. Fahrzeugrad nach Anspruch 1, gekennzeichnet durch einen mehrteiligen Sicherheitsring (1, 1').

9. Fahrzeugrad nach Anspruch 1, gekennzeichnet durch einen Sicherheitsring (1'), der mit der Felgenschüssel (9) und/oder dem Reifenwulst (4) in Umfangsrichtung des Rades eine Verzahnung (21, 22, 23) bildet.


Hannover, den 10. Februar 1984
Akte: 84-6 P/Sr          Sr/Bu

**FIG.1**

**FIG.2**

Continental
Gummi-Werke AG

84-50

## FIG. 3

## FIG. 4

Continental
Gummi-Werke AG

FIG.5